# EUROPÄISCHE PATENTSCHRIFT

(11) **EP 2 904 025 B1**
(45) Veröffentlichungstag und Bekanntmachung des Hinweises auf die Patenterteilung: **16.12.2020**
(21) Anmeldenummer: 13770911.9
(22) Anmeldetag: 01.10.2013
(51) Int. Cl.: C08G 18/10, C08G 18/32, C08G 18/38, C08G 18/48, C08G 18/50, B22C 3/00, B22C 23/00

(54) **POLYURETHANGIESSMASSE ZUR HERSTELLUNG VON VERSCHLEISSSCHUTZSCHICHTEN IN GIESSEREIANWENDUNGEN**
POLYURETHANE CAST COMPOUND FOR THE PRODUCTION OF ANTI-WEAR PROTECTIVE COATINGS IN CASTING APPLICATIONS
MASSE DE FONDERIE DE POLYURÉTHANE DESTINÉE À LA FABRICATION DE COUCHES DE PROTECTION CONTRE L'USURE DANS DES APPLICATIONS DE FONDERIE

(30) Priorität: 01.10.2012 EP 12186891
(43) Veröffentlichungstag der Anmeldung: 12.08.2015
(73) Patentinhaber: Sika Technology AG, 6340 Baar (CH)
(72) Erfinder: DÜRNAY, Wolfgang, 72574 Bad Urach (DE); GNEITING, Florian, 72622 Nürtingen (DE)
(74) Vertreter: Sika Patent Attorneys
(86) Internationale Anmeldenummer: PCT/EP2013/070389
(87) Internationale Veröffentlichungsnummer: WO 2014/053458

(56) Entgegenhaltungen:
- EP-A1- 1 178 097
- DE-B- 1 280 493
- US-A- 5 212 032
- US-A1- 2003 236 381
- US-A1- 2010 314 067

## Beschreibung

### Technisches Gebiet

Die Erfindung betrifft die Verwendung einer mehrkomponentigen Zusammensetzung, umfassend eine Isocyanat-Komponente und eine Amin-Komponente, wobei die Isocyanat-Komponente ein Präpolymer, erhältlich aus Toluylendiisocyanat und einem Polytetramethylenpolyol, umfasst und die Amin-Komponente ein Dialkylthioaryldiamin sowie gegebenenfalls ein Polytetramethylenoxidpolyamin umfasst, für den Gießereimodellbau, und zwar als Gießharz oder Oberflächenharz. Die erfindungsgemäßen Zusammensetzungen eignen sich insbesondere als Schutzschichten für Kernkästen und Modelle zur Sandkern- bzw. Sandformherstellung. Weiterhin betrifft die vorliegende Erfindung ein Verfahren zur Herstellung von Modellen für Gießereianwendungen, wobei im Rahmen dieses Verfahrens eine wie vorstehend beschriebene mehrkomponentige Zusammensetzung auf ein Formteil aufgetragen oder aufgegossen und ausgehärtet wird.

### Stand der Technik

Kernkästen und Formplatten für den Metallguss können nach bekannten Verfahren aus Metall oder durch Bearbeitung aus vorgefertigten polymeren Blockmaterialien hergestellt werden. Gegenüber reinen Metallwerkzeugen haben polymere Werkstoffe den Vorteil der schnelleren Fertigung sowie einer höheren Lebensdauer und der einfacheren Reparierbarkeit und Ersetzbarkeit.

Der Einsatz von flüssigen Gießharzsystemen, die direkt beim Formenbau in variablen Größen vergossen werden können, bietet gegenüber den vorstehenden Verfahren eine höhere Flexibilität, und sind zudem mit dem Vorteil verbunden, dass sie keine umfangreiche maschinelle Ausrüstung erfordern. Die Herstellung von Oberflächenschutzschichten für Formplatten und Kernkästen für die Sandformgebung in Gießereianwendungen erfolgt daher in den meisten Fällen über einen manuellen Verguss bzw. Auftrag entsprechender Harzsysteme und kann direkt in den Modellbaufirmen oder -abteilungen durchgeführt werden. Für solche Anwendungen geeignete Harze müssen unter Raumtemperaturbedingungen verarbeitet werden können, und sich demzufolge hinsichtlich ihrer Reaktivität und Viskosität in bestimmten Grenzen bewegen. Darüber hinaus müssen sie eine hohe Handhabungssicherheit bieten, d.h. keine Tendenz zu Blasenbildung unter Feuchtigkeit haben.

Seit mehr als 30 Jahren werden Polyurethangießharze auf Basis von Dicyclohexylmethan-diisocyanatpräpolymeren und Diphenylmethandiamin (DDM) als Härter mit Erfolg zur Herstellung von Oberflächenschutzschichten in Gießereianwendungen eingesetzt. Ein solches Harz war beispielsweise unter dem Handelsnamen Biresin® U1320 von Sika erhältlich. Diese Materialien zeichneten sich in insbesondere hinsichtlich ihrer Versschleißfestigkeit und Verarbeitbarkeit durch herausragende Eigenschaften aus. Aufgrund des physiologischen Gefahrenpotentials von Diphenylmethandiamin wurde eine REACH-Registrierung jedoch von den Herstellern dieses Produkts nicht vorgenommen. Damit können die formulierten Produkte ab August 2014 nicht mehr verarbeitet werden.

Als Alternative für Gießharzsysteme auf Basis von DDM wurden in jüngerer Vergangenheit Systeme auf Basis von HDI/Dimethylthiotolylendiamin getestet und vermarktet. Es hat sich jedoch gezeigt, dass im Praxiseinsatz dieser Gießharze Probleme auftreten, wie beispielsweise ein ungünstiges Schwindungsverhalten der Materialien, ein problematisches Anhaften von Sand bei Formplatten sowie eine geringe Verschleißfestigkeit. Damit sind die bisher auf dem Markt verfügbaren Alternativen ohne DDM für eine Verwendung als Gießharze nicht geeignet.

Um die Vorteile von Gießharzsystemen weiterhin für Metallgussanwendungen nutzen zu können, ist es demzufolge erforderlich, eine Alternative für auf Diphenylmethandiamin basierende Gießharzsysteme zu finden. Es besteht daher ein Bedarf an Gießharzsystemen bzw. -massen, die geeignete Verarbeitungseigenschaften, insbesondere eine gute Fließfähigkeit, aufweisen. Gleichzeitig sollten diese Gießmassen gegenüber den bisher verfügbaren DDM-freien Gießharzsystemen ein verbessertes Schwindungsverhalten zeigen, möglichst nicht zur Sandanhaftung neigen und eine hohe Verschleißfestigkeit aufweisen. Die Systeme sollten zweckmäßig ähnliche Eigenschaften haben, wie die aus dem Stand der Technik bekannten auf DDM basierenden Materialien, jedoch keinen Gehalt an giftigen Substanzen, wie Diphenylmethandiamin, aufweisen.

Polyurethane auf Basis von aromatischen Polyisocyanaten und Polyalkylenglycolen wie Polytetramethyleglycol, deren Härtung durch den Zusatz von Dialkylthioaryldiaminen erfolgt, werden im Stand der Technik für verschiedene Anwendungen beschreiben.

So offenbart die US 2010/314067 A1 Riemen für Schuhpressen im Bereich der Papierherstellung, die eine mit einer Polyurethanschicht versehene, Faser-verstärkte Basis aufweisen. Die mit Hilfe von Dialkylthioaryldiaminen gehärteten Polyurethane weisen jedoch im Vergleich zu mit 1,4-Butadien gehärteten Polyurethanen ein ungünstigeres Bruchverhalten auf.

Die US 5,212,032 offenbart entsprechende Polyurethane als Beschichtungen für Elemente zur Übertragung von Tonerbildern von einer auf eine andere Trägeroberfläche. Die Polyurethane weisen eine relativ hohe Shore Härte von 90 und eine gute Widerstandfähigkeit gegenüber hoher Luftfeuchtigkeit auf.

Schließlich offenbart die US 2003/236381 A1 die Verwendung entsprechender Polyurethane als Beschichtungen für Golf-Bälle. Für derartige Beschichtungen werden gute Flugeigenschaften der Bälle nachgewiesen.

Allen diesen Offenbarungen ist jedoch gemeinsam, dass der Gehalt der auf Isocyanate zurückgehenden Bestandteile, und damit auch der Gehalt an auf den Härter zurückgehenden Bestandteilen, relativ gering ist. Dies hat aufgrund des Verhältnisses der Gehalte an aromatischen zu den aliphatischen Bestandteilen erhebliche Auswirkungen auf die Eigenschaften der gehärteten Polyurethane.

Darüber hinaus sind aus der EP 1 178 097 A1 Kautschuk-Klebstoffe auf Basis von Polytetrahydrofuran-Aminobenzoatestern, Dialkylthioaryldiaminen und Trimeren von Hexamethylendiisocyanat bekannt, mit deren Hilfe Kautschuk-Substrate, wie beispielsweise in Reifen, verklebt werden können. Solche Systeme weisen jedoch für die Verwendung in Kernkästen für Gießereianwendungen ungenügende Abriebeigenschaften auf.

Schließlich ist beispielsweise aus der DE 1 280 493 bekannt, dass Polyurethane als Bindemittel für Sand in Gießereiformen eingesetzt werden können. Diese Systeme weisen jedoch in der Regel ebenfalls nur ungünstige Abriebeigenschaften auf, und sind somit nicht für die Herstellung von Oberflächenschutzschichten geeignet.

Die vorliegende Erfindung liefert eine Lösung für die im vorstehenden beschriebenen Probleme, in dem sie eine Zusammensetzung zur Verfügung stellt, die vergleichbare Eigenschaften aufweist, wie die konventionell mit Diphenylmethandiaminen hergestellten Oberflächenschutzschichten.

### Beschreibung der Erfindung

Ein erster Aspekt der vorliegenden Erfindung betrifft die Verwendung einer mehrkomponentigen Zusammensetzung, umfassend eine Isocyanat-Komponente und eine Amin-Komponente, wobei die Isocyanat-Komponente ein Präpolymer aus Toluylendiisocyanat und einem Polytetramethylenpolyol umfasst und die Amin-Komponente ein Dialkylthioaryldiamin, bevorzugt ein Dialkylthiotolylendiamin, und gegebenenfalls ein Polytetramethylen-oxidpolyamin umfasst, für den Gießereimodelbau, und zwar als Gießharz oder Oberflächenharz.

Darüber hinaus betrifft die vorliegende Erfindung Modelle bzw. Kernkästen für Gießereianwendungen, die dadurch gekennzeichnet sind, dass sie eine Schicht, insbesondere eine Verschleißschutzschicht, aus einer gehärteten Zusammensetzung, die aus einer wie vorstehend beschrieben mehrkomponentigen Zusammensetzung erhältlich ist, aufweisen. Schließlich betrifft die vorliegende Erfindung ein Verfahren zur Herstellung von Modellen bzw. Kernkästen für Gießereianwendungen, das dadurch gekennzeichnet ist, dass eine wie vorstehend beschriebene mehrkomponentige Zusammensetzung gemischt und auf ein Formteil aufgetragen bzw. aufgegossen und ausgehärtet wird.

Der Begriff "Amin-Komponente" ist im Zusammenhang mit der vorliegenden Erfindung so zu verstehen, dass die Bestandteile der Amin-Komponente während der Lagerung der Zusammensetzung räumlich von den Bestandteilen der Isocyanat-Komponente getrennt sein sollen.

Zusätzlich zu der genannten Isocyanat- und Amin-Komponente kann die mehrkomponentige Zusammensetzung auch weitere Komponenten enthalten. Es ist jedoch bevorzugt, wenn die mehrkomponentige Zusammensetzung im Wesentlichen aus der Isocyanat- und der Amin-Komponente besteht.

Die Isocyanat-Komponente umfasst, wie vorstehend beschrieben, ein Präpolymer, erhältlich aus Toluylendiisocyanat (TDI) und einem Polytetramethylenpolyol. Im Rahmen der vorliegenden Erfindung hat es sich als zweckmäßig herausgestellt, wenn dieses Präpolymer einen Isocyanatgehalt im Bereich von etwa 7 bis 10%, vorzugsweise etwa 8 bis 9,5% aufweist. Der Isocyanatgehalt berechnet sich als Quotient des Gesamtgewichts aller Isocyanate im Präpolymer zu dem Gesamtgewicht des Präpolymers.

Im Rahmen der vorliegenden Erfindung hat es sich weiterhin gezeigt, dass das Polytetramethylenpolyol im Präpolymer der Isocyanat-Komponente vorzugsweise ein Molekulargewicht (Mw) im Bereich von etwa 250 bis 1500, sowie vorzugsweise von etwa 250 bis 1000, und besonders bevorzugt von etwa 650 bis 1000 aufweist. Weist das Polytetramethylenpolyol ein Molekulargewicht (Mw) von unter 250 auf, so führt dies dazu, dass das Material nur noch schwer verarbeitet werden kann. Wird ein Polytetramethylenpolyol mit einem Molekulargewicht von mehr als 1500 eingesetzt, weisen die resultierenden Produkte keine optimale Steifigkeit und Beständigkeit auf.

Die Viskosität der ersten Komponente bei 25 ° C liegt vorzugsweise im Bereich von 6000 bis 20000 mPa.s, besonders bevorzugt im Bereich von 7000 bis 14000 mPa.s. Diese Viskositäten sind im Rahmen der Erfindung mit einem Rotationsviskosimeter mit einem Rotationsdrehkörper Z3 DIN und einem Schergefälle von D = 10 bei 25 ° C zu bestimmen. Es hat sich gezeigt, dass insbesondere Viskositäten von weniger als 6000 mPa.s nach der Vermischung der Isocyanat- und Aminkomponente zu geringen Anfangsviskositäten der Gemische führen. Dies ist insbesondere bei Gießharz-Anwendungen ungünstig, da sich in diesen Zusammensetzungen leichter Blasen und Lufteinschlüsse bilden können. Dies führt zu einem erhöhten Reparaturbedarf der Produkte. Weiterhin können Gießharze mit sehr niedriger Viskosität auch noch in sehr schmale Spalte eindringen, die sich bei Gießereinanwendungen oft nicht vermeiden lassen. Nach dem Aushärten der Gießmasse ist daher ein erhöhter Aufwand nötig, um unerwünschte Überstände zu beseitigen.

Es ist weiterhin bevorzugt, wenn es sich bei dem Dialkylthioaryldiamin um ein Dialkylthiotolylendiamin handelt, wobei der Alkylrest vorzugsweise ein Alkylrest mit 1 bis 6 Kohlenstoffatomen ist. Besonders bevorzugt liegt das Dialkylthioaryldiamin in Form von Dimethylthiotolylendiamin vor. Ein solches Produkt ist beispielsweise unter dem Handelsnamen Ethacure 300 von Albemarle Corp. USA erhältlich. Im Rahmen der vorliegenden Erfindung hat es sich gezeigt, dass die Thioalkylgruppen zu einer notwendigen Verlangsamung der Polyadditon mit dem Isocyanatpräpolymer führen, so dass das Produkt eine für die Verarbeitung notwendige Fließfähigkeit für einen ausreichenden Zeitraum aufweist. In den Vergleichsversuchen konnte gezeigt werden, dass beispielsweise analoge Dialkyltolylendiamine zu schnell aushärten und somit für entsprechende Anwendungen nicht geeignet sind. Das Dialkylthioaryldiamin kann mit Isocyanaten unter Bildung von Harnstoffbrücken reagieren.

Der Gehalt an Dialkylthioaryldiamin in der Amin-Komponente liegt im Rahmen der vorliegenden Erfindung vorzugsweise im Bereich von etwa 30 bis 70 Gew.-%, insbesondere im Bereich von etwa 40 bis 65 Gew.-%, und besonders bevorzugt im Bereich von etwa 45 bis 55 Gew.-%, bezogen auf das Gesamtgewicht der Amin-Komponente.

Im Rahmen der vorliegenden Erfindung hat es sich gezeigt, dass der Zusatz eines Polytetramethylenoxidpolyamins mit besonderen Vorteilen verbunden ist. So lassen sich mit Hilfe dieses zusätzlichen Amins optimale Eigenschaften von für Gießereinanwendungen geeigneten Gießharzen einstellen. Das Polytetramethylenoxidpolyamins kann zweckmäßig zusätzlich zu dem Dialkylthioaryldiamin in der Amin-Komponente enthalten sein, wobei es räumlich von dieser Komponente getrennt sein kann, oder in einem oder mehreren Behältnissen in Mischung mit diesem Bestandteil vorliegt.

Das Polytetramethyloxidpolyamin liegt bevorzugt in Form eines Diamins vor. Für den Fachmann ist ersichtlich, dass das Amin im Polytetramethyloxidpolyamin als primäres oder sekundäres Amin vorliegen muss, da ein tertiäres Amin nicht unter Aushärtung mit Polyisocyanaten reagieren kann. Das Amin kann Amin direkt oder über einen Linker (der nicht aus einer Tetramethyleneinheit besteht) an das Polytetramethyloxid gebunden sein. Das Amin ist besonders bevorzugt über ein Linkermolekül mit dem Polytetramethylenoxid verbunden. In einer ganz besonders bevorzugten Ausführungsform handelt es sich bei dem Linker um einen 4-Carboxyphenyl-Linker. Entsprechende Produkte sind beispielsweise unter dem Handelsnamen Versalink von der Firma Air Products erhältlich.

Für das Polytetramethylenoxidpolyamin ist es ebenfalls bevorzugt, wenn das berechnete Molekulargewicht (Mw) des Polytetramethylen-oxidanteils dieser Komponente im Bereich von etwa 250 bis 1500, besonders bevorzugt im Bereich von etwa 250 bis 1000, und am meisten bevorzugt im Bereich von 650 bis 1000 liegt.

Die Menge des Polytetramethylenoxidpolyamins liegt vorzugsweise im Bereich von etwa 5 bis 25 Gew.-%, und insbesondere von etwa 8 bis 13 Gew.-%, bezogen auf das Gesamtgewicht der Amin-Komponente.

Im Rahmen der vorliegenden Erfindung hat es sich als zweckmäßig herausgestellt, wenn die Amin-Komponente zusätzlich zu den bezeichneten Bestandteilen einen nicht verseifbaren Weichmacher enthält. Vorzugsweise liegt dieser Weichmacher in Form eines Alkylsulfonsäureesters, besonders bevorzugt eines Phenolalkylsulfonsäureesters, vor. Geeignete Produkte werden beispielsweise unter dem Handelsnamen Mesamoll® II von der Firma Lanxess, Deutschland, vertrieben.

Wird die Amin-Komponente mit einem zusätzlichen nicht verseifbaren Weichmacher formuliert, so ist dieser in der Amin-Komponente vorzugsweise mit einem Gehalt im Bereich von etwa 20 bis 60 Gew.-% sowie besonders bevorzugt im Bereich von etwa 30 bis 45 Gew.-%, bezogen auf das Gesamtgewicht der Amin-Komponente, enthalten.

Im Rahmen der vorliegenden Erfindung ist es weiterhin bevorzugt, wenn die Isocyanat- und Amin-Komponente in einem Gewichtsverhältnis im Bereich von etwa 5:1 bis 1:1, besonders bevorzugt im Bereich von etwa 4:1 bis 2:1 und am meisten bevorzugt im Bereich von etwa 3:1 bis 2,2:1 vorliegen bzw. gemischt werden. Das genaue Mischungsverhältnis richtet sich weiterhin auch nach der Menge an Amin in der Amin-Komponente sowie der Menge an Isocyanat (NCO) in der Isocyanat-Komponente. Im Rahmen der vorliegenden Erfindung ist es bevorzugt, wenn das stöchiometrische Verhältnis NCO/NH₂ in der gesamten mehrkomponentigen Zusammensetzung im Bereich von 1 : 1 bis 1,1 : 1, insbesondere im Bereich von 1,02 : 1 bis 1,05 : 1 liegt. Ein geringer Überschuss an Isocyanat gewährleistet, dass trotz der Reaktion mit Luftfeuchtigkeit die in der Zusammensetzung vorhandenen Amine vollständig zu Harnstoffen abreagieren.

In einer besonders bevorzugten Ausführungsform der vorliegende Erfindung umfasst die mehrkomponentige Zusammensetzung 200 bis 300 Gewichtsteile einer Isocyanat-Komponente, die ein Präpolymer auf Basis von Toluylendiisocyanat und Polytetramethylenglycol mit einem Molekulargewicht (Mw) im Bereich von 650 bis 1000 mit einem Isocyanat-Gehalt im Bereich von 7 bis 10 % enthält, und 100 Gewichtsteile einer Aminkomponente, die Dimethylthiotoluylendiamin und Polytetramethylenoxid-di-p-aminobenzoat mit einem Molekulargewicht (Mw) von etwa 650 enthält.

Der vorliegenden Erfindung betrifft zudem Modelle für Gießereianwendungen, insbesondere für Metallgussanwendungen und besonders bevorzugt für Eisen- bzw. Alugussanwendungen, das dadurch gekennzeichnet ist, dass es eine Schicht aus einer Zusammensetzung, die durch aushärten einer wie vorstehend beschriebenen mehrkomponentigen Zusammensetzung erhältlich ist, aufweist. In einer besonders bevorzugten Ausführungsform handelt es sich bei dem Modell um ein Modell zur Herstellung von Sandformen oder um Kernkästen für die Sandkernherstellung. Es ist weiterhin bevorzugt, dass das Modell eine Schicht aus der gehärteten Zusammensetzung mit einer Dicke im Bereich von etwa 0,1 bis 25 mm, insbesondere etwa 6 bis 15 mm, und besonders bevorzugt 6 bis 10 mm aufweist.

Schließlich betrifft ein Aspekt der vorliegenden Erfindung ein Verfahren zur Herstellung von Modellen bzw. Kernkästen für Gießereianwendungen, das dadurch gekennzeichnet ist, dass eine wie vorstehend beschriebene mehrkomponentige Zusammensetzung gemischt und auf ein Formteil aufgetragen bzw. aufgegossen und ausgehärtet wird. Das Formteil weist zweckmäßig eine Form auf, die mit der Form von später herzustellenden Sandformen mindestens teilweise identisch ist. Innerhalb des Verfahrens ist es weiterhin bevorzugt, wenn die Zusammensetzung in einen Hohlraum gegossen wird, der durch das Formteil sowie einen Behälter oder Träger, der das Formteil auf der Seite umschließt, die die abzubildende Form aufweist, gebildet wird. Der Behälter und das Formteil bilden dadurch einen Hohlraum, in den die mehrkomponentige Zusammensetzung nach Vermischung der Komponenten eingebracht wird. Dadurch bildet die Zusammensetzung nach Aushärtung einen Abdruck des Formteils. Der Hohlraum weist vorzugsweise eine durchschnittliche Dicke von im Bereich von etwa 5 bis 25 mm, insbesondere etwa 6 bis 15 mm, und besonders bevorzugt 6 bis 10 mm auf.

Im Weiteren wird die vorliegende Erfindung durch einige Beispiele illustriert, die jedoch den Schutzumfang der vorliegenden Erfindung nicht in irgendeiner Weise beeinträchtigen sollen.

### Beispiele

Im Folgenden wurden verschiedene Gießharze gemäß den in Tabelle 1 angegebenen Zusammensetzungen formuliert. Alle Zahlenangaben sind in Gewichtsteilen.

**Tabelle 1**

| **Beispiel** | **1** | **2** | **3** | **4** | **5** | **6** | **7** | **HDI 1** | **HDI 2** |
|---|---|---|---|---|---|---|---|---|---|
| **Isocyanat-Komponente** | | | | | | | | | |
| TDI-PTMEG - Präpolymer, 9,0 NCO%¹ | 250 | 238 | 227 | 264 | | | 264 | | |
| TDI-PTMEG - Präpolymer, 7,0 NCO%² | | | | | 555 | | | | |
| HDI-Biuret 23 NCO% | | | | | | | | 65-70 | |
| HDI-Trimerisat 11 NCO% | | | | | | | | | 264 |

| **Amin-Komponente** | | | | | | | | | |
|---|---|---|---|---|---|---|---|---|---|
| Dimethylthiotoluylendiamin | 52 | 50 | 47 | 55 | 100 | 58 | 58 | 15-20 | 70 |
| Polytetramethylenoxide-di-p-amino-benzoat³ | 10 | 10 | 10 | 10 | | | | 80-85 | |
| Alkylsulfonsäureester des Phenols | 38 | 40 | 43 | 35 | | 42 | 42 | | 30 |

| | | | | | | | | | |
|---|---|---|---|---|---|---|---|---|---|
| ¹ Imuthane™ PET-75D; ² Imuthane™ PET-60D; 3 Versalink® P-650 . | | | | | | | | | |

Diese Zusammensetzung wurde auf ihre Verarbeitungseigenschaften untersucht. Die Eigenschaften wurden anhand der folgenden Vorschriften bestimmt.

Die Viskosität der Isocyanatkomponente und des Gemischs aus Isocyanat- und Aminkomponente wurde bei 25 ° C mit einem Rotationsviskosimeter Physica MC10 mit einem Rotationsdrehkörper Z3 DIN und einem Schergefälle von D = 10 bestimmt. Die Viskosität der Härterkomponente wurde bei 25 C mit demselben Verfahren, aber einem Schergefälle von 100 bestimmt.

Die *Gelierzeit* wird bei 20 ° C mit Hilfe eines Geltimers Tecam GT4 bestimmt. Dazu wird die temperierten Komponenten gemäß dem angegebenen Mischungsverhältnis eingewogen. Das Material wird dann ca. 1 Minute lang bis zur Homogenität gemischt. Anschließend wird die Mischung in einen Behälter auf die 100 ml-Markierung umgeleert, in die isolierte Box des Geltimers eingesetzt und der Rührstab in der Mitte des Behälters positioniert. Nach 1 Minute wird die Messung gestartet. Die Messung ist beendet, wenn dies durch das Gerät angezeigt wird. Die Gelierzeit entspricht der Zeit vom Begin des Vermischens bis zum Ende der Messung.

Die *Topfzeit* wurde anhand eines Prüfansatzes von 500 g bei Raumtemperatur (20 bis 23 ° C) im nicht isolierten Polyethylen-Becher gemessen.

Die *lineare Schwindung* entspricht der Längenänderung im Vergleich zur Ausgangslänge eines gegossenen Schwundstabes in Prozent. Die Prüfschwundstäbe weisen Dimensionen von 500 mm Länge, 40 mm Breite und 10 mm Höhe auf. Die untersuchten Materialien wurde nach 16 Stunden aus der Form genommen (entformt) und die Längenänderung der Stäbe nach 14 Tagen Lagerung bei 23 ° C und 50 % relativer Luftfeuchtigkeit bestimmt.

Die *Shore-Härte* wurde gemäß der ISO 868 bestimmt.
Die *Reißfestigkeit* und *Reißdehnung* wurde gemäß der ISO 527 bestimmt.
Das *E-Modul* wurde gemäß der ISO 178 bestimmt.
Der *Abrieb* wurde gemäß der ISO 4649 bestimmt.

Die Ergebnisse der Eigenschaftsmessungen sind in der folgenden Tabelle 2 angegeben.

**Tabelle 2**

| **Beispiel** | | | | **1** | **2** | **3** | **4** | **5** | **6** | **7** | **HDI 1** | **HDI 2** |
|---|---|---|---|---|---|---|---|---|---|---|---|---|
| **Verarbeitungsdaten** | | | | | | | | | | | | |
| | Norm | Einheit | Anforderung | | | | | | | | | |
| Viskosität@25 ° C | Iso-Komp. | mPas | | 14000 | 14000 | 14000 | 14000 | 7400 | 9000 | 14000 | 2200 | 5500 |
| | Amin-Komp. | | | 270 | 260 | 250 | 290 | 650 | 150 | 150 | 4500 | 200 |
| | Mischung | | ausreichend fließfähig bei RT | i.O. | i.O. | i.O. | i.O. | i.O. | i.O. | i.O. | i.O. | i.O. |
| Gelierzeit@20 ° C (100 ml) | | min | ≥ 25 min | 20 | 20 | 22 | 18 | 20 | 20 | 18 | 25 | 25 |
| Topfzeit@RT (500g) | | min | ≥ 15 min | i.O. | i.O. | i.O. | i.O. | i.O. | i.O. | i.O. | i.O. | i.O. |

| **Physikalische Eigenschaften (NK 23/50)** | | | | | | | | | | | | |
|---|---|---|---|---|---|---|---|---|---|---|---|---|
| | Norm | Einheit | Anforderung | | | | | | | | | |
| Shore-Härte@RT | ISO 868 | | D 56 | D 62 | D 60 | D 59 | D 65 | D 58 | D 56 | D 64 | D 65 | D 62 |
| Reißfestigkeit | ISO 527 | MPa | | 50 | 45 | 40 | 50 | 35 | | | 22 | 25 |
| Reißdehnung | ISO 527 | % | | 300 | 300 | 300 | 300 | 300 | | | 100 | 70 |
| E-Mod Biege | ISO 178 | MPa | ∼200-600 MPa | 200 | 180 | 160 | 250 | 140 | | | 400 | 250 |
| Abrieb | ISO 4649 | mm³ | ≤ 150 | 70 | 70 | 70 | 70 | 70 | 150 | 80 | 200 | 200 |
| lineare Schwindung, 16h Entformzeit | | % | < 0,17% | 0,12 | 0,12 | 0,12 | 0,13 | 0,16 | 0,16 | 0,15 | 0,12 | 0,1 |
| Aushärteverhalten | | | ohne Spröd phase u. ohne Einfallstellen | i.O. | i.O. | i.O. | i.O. | i.O. | i.O. | i.O. | nicht i.O | nicht i.O |

| | | | | | | | | | | | | |
|---|---|---|---|---|---|---|---|---|---|---|---|---|
| i.O. = innerhalb der Anforderungen | | | | | | | | | | | | |

Es zeigt sich, dass die erfindungsgemäßen Zusammensetzungen im Vergleich zu Zusammensetzungen auf Basis von HDI mit entsprechenden Aminkomponenten eine signifikant verbesserte Abriebbeständigkeit aufweisen. Mit den erfindungsgemäßen Zusammensetzungen konnten dennoch vergleichbare Werte hinsichtlich der Härte, Reißfestigkeit, Reißdehnung und des E-Moduls erzielt werden. Die Schwindung ist mit der von entsprechenden HDI-basierten Materialien vergleichbar. Für die Zusammensetzungen auf Basis von HDI konnten häufig Einfallstellen beobachtet werden, die als Dellen auf der Oberfläche des gegossenen Harzes beobachtet werden können. Dies trat bei 40 bis 50 % der gegossenen Produkte auf und macht diese für eine direkte Verwendung unbrauchbar. Weiterhin konnte bei HDI-basierten Harzen häufig Sprödphasen beobachtet werden, die aus einer nicht vollständigen Aushärtung der Harze resultieren. Da die Harze häufig auf Kunststoffträger aufgebracht werden ist ein späteres Tempern, mit dem die vollständige Aushärtung erreicht werden könnte, nicht möglich, da dies zu einer Verformung der Kunststoffträgers führen könnte. Alle erfindungsgemäßen Harze wiesen nach der Aushärtung keine Einfallstellen und Sprödphasen auf. Weiterhin zeigt es sich, dass bei Verwendungen von Dimethylthiotoluylendiamin ohne Polytetramethylenpolyamin nicht in allen Fällen optimale Fließfähigkeiten erzielt werden können. Bei Beispiel 6 zeigte sich eine geringere Abriebbeständigkeit als bei den Zusammensetzungen die sowohl Dimethylthiotoluylendiamin als auch Polytetramethylenpolyamin enthielten.

## Patentansprüche

1. Verwendung einer mehrkomponentigen Zusammensetzung, umfassend eine Isocyanat-Komponente und eine Amin-Komponente,
wobei die Isocyanat-Komponente ein Präpolymer, erhältlich aus Tolylendiisocyanat und einem Polytetramethylenpolyol, umfasst, und
die Amin-Komponente ein Dialkylthioaryldiamin, bevorzugt ein Dialkylthiotolylendiamin, und gegebenenfalls ein Polytetramethylenoxidpolyamin umfasst,
für den Gießereinmodelbau, und zwar als Gießharz oder Oberflächenharz.

2. Modell bzw. Kernkasten für Gießereianwendungen, **dadurch gekennzeichnet, dass** es eine Schicht aus einer gehärteten Zusammensetzung aufweist, die aus einer mehrkomponentigen Zusammensetzung erhältlich ist, umfassend eine Isocyanat-Komponente und eine Amin-Komponente,
wobei die Isocyanat-Komponente ein Präpolymer, erhältlich aus Tolylendiisocyanat und einem Polytetramethylenpolyol, umfasst, und
die Amin-Komponente ein Dialkylthioaryldiamin, bevorzugt ein Dialkylthiotolylendiamin, und gegebenenfalls ein Polytetramethylenoxidpolyamin umfasst.

3. Modell gemäß Anspruch 2, **dadurch gekennzeichnet, dass** das Modell ein Modell zur Herstellung von Sandformen oder ein Kernkasten für die Sandkern-Herstellung ist.

4. Modell gemäß Anspruch 2 oder 3, **dadurch gekennzeichnet, dass** die Schicht aus der gehärteten mehrkomponentigen Zusammensetzung eine Dicke im Bereich von etwa 6 bis 15 mm aufweist.

5. Verfahren zur Herstellung von Modellen bzw. Kernkästen für Gießereinanwendungen, **dadurch gekennzeichnet, dass** eine mehrkomponentige Zusammensetzung umfassend eine Isocyanat-Komponente und eine Amin-Komponente,
wobei die Isocyanat-Komponente ein Präpolymer, erhältlich aus Tolylendiisocyanat und einem Polytetramethylenpolyol, umfasst, und
die Amin-Komponente ein Dialkylthioaryldiamin, bevorzugt ein Dialkylthiotolylendiamin, und gegebenenfalls ein Polytetramethylenoxidpolyamin umfasst, gemischt und auf ein Formteil aufgetragen oder aufgegossen und ausgehärtet wird.

6. Mehrkomponentige Zusammensetzung, umfassend eine Isocyanat-Komponente und eine Amin-Komponente,
wobei die Isocyanat-Komponente ein Präpolymer, erhältlich aus Tolylendiisocyanat und einem Polytetramethylenpolyol, umfasst, das einen Isocyanatgehalt von 7 bis 10 % aufweist, und
die Amin-Komponente ein Dialkylthioaryldiamin, bevorzugt ein Dialkylthiotolylendiamin, und gegebenenfalls ein Polytetramethylenoxidpolyamin umfasst.

7. Mehrkomponentige Zusammensetzung gemäß Anspruch 6, **dadurch gekennzeichnet, dass** die Zusammensetzung im Wesentlichen aus der Isocyanat- und Amin-Komponente besteht.

8. Mehrkomponentige Zusammensetzung gemäß Anspruch 6 oder 7, **dadurch gekennzeichnet, dass** das Präpolymer einen Isocyanatgehalt im Bereich von 8 bis 9,5% aufweist.

9. Mehrkomponentige Zusammensetzung gemäß einem der Ansprüche 6 bis 8, **dadurch gekennzeichnet, dass** das Dialkylthioaryldiamin in Form von Dimethylthiotolylendiamin vorliegt.

10. Mehrkomponentige Zusammensetzung gemäß einem der Ansprüche 6 bis 9, **dadurch gekennzeichnet, dass** die Aminkomponente zusätzlich ein Polytetramethylenoxidpolyamin in Form eines Diamins enthält, in dem das Amin vorzugsweise über ein Linker-Molekül, besonders bevorzugt über einen 4-Carboxyphenyl-Linker, mit dem Polytetramethylenoxid verbunden ist.

11. Mehrkomponentige Zusammensetzung gemäß einem der Ansprüche 6 bis 10, **dadurch gekennzeichnet, dass** die Amin-Komponente zusätzlich einen nicht verseifbaren Weichmacher, vorzugsweise in Form eines Alkylsulfonsäureesters, besonders bevorzugt eines Phenolalkylsulfonsäureesters, umfasst.

12. Mehrkomponentige Zusammensetzung gemäß Anspruch 11, **dadurch gekennzeichnet, dass** die Amin-Komponente einen Gehalt an Dialkylthioaryldiamin im Bereich von etwa 30 bis 70 Gew.-%, einen Gehalt an Polytetramethylenoxidpolyamin im Bereich von etwa 5 bis 25 Gew.-%, und einen Gehalt an nicht verseifbarem Weichmacher im Bereich von 20 bis 60 Gew.-% aufweist.

13. Mehrkomponentige Zusammensetzung gemäß einem der Ansprüche 6 bis 10, **dadurch gekennzeichnet, dass** die Isocyanat- und Amin-Komponente in einem Gewichtsverhältnis im Bereich von etwa 4 : 1 bis 2 : 1, vorzugsweise im Bereich von 3 : 1 bis 2,2 : 1 vorliegen

## Claims

1. Use of a multi-component composition, comprising an isocyanate component and an amine component,
where the isocyanate component comprises a prepolymer obtainable from tolylene diisocyanate and from a polytetramethylene polyol, and
the amine component comprises a dialkylthioaryldiamine, preferably a dialkylthiotolylenediamine, and optionally a polytetramethylene oxide polyamine,
for foundry model construction, and specifically as casting resin or surface resin.

2. Model or core box for foundry applications, **characterized in that** it has a layer of a cured composition which is obtainable from a multi-component composition comprising an isocyanate component and an amine component,
where the isocyanate component comprises a prepolymer obtainable from tolylene diisocyanate and from a polytetramethylene polyol, and
the amine component comprises a dialkylthioaryldiamine, preferably a dialkylthiotolylenediamine, and optionally a polytetramethylene oxide polyamine.

3. Model according to Claim 2, **characterized in that** the model is a model for producing sand moulds or is a core box for sand core production.

4. Model according to Claim 2 or 3, **characterized in that** the layer of the cured multi-component composition has a thickness in the range from about 6 to 15 mm.

5. Method for producing models or core boxes for foundry applications, **characterized in that** a multi-component composition comprising an isocyanate component and an amine component,
where the isocyanate component comprises a prepolymer obtainable from tolylene diisocyanate and from a polytetramethylene polyol, and
the amine component comprises a dialkylthioaryldiamine, preferably a dialkylthiotolylenediamine, and optionally a polytetramethylene oxide polyamine, is mixed and is applied to or cast onto a moulding and cured.

6. Multi-component composition, comprising an isocyanate component and an amine component,
where the isocyanate component comprises a prepolymer obtainable from tolylene diisocyanate and from a polytetramethylene polyol and having an isocyanate content of 7 to 10%, and
the amine component comprises a dialkylthioaryldiamine, preferably a dialkylthiotolylenediamine, and optionally a polytetramethylene oxide polyamine.

7. Multi-component composition according to Claim 6, **characterized in that** the composition consists substantially of the isocyanate component and amine component.

8. Multi-component composition according to Claim 6 or 7, **characterized in that** the prepolymer has a isocyanate content in the range from 8 to 9.5%.

9. Multi-component composition according to any of Claims 6 to 8, **characterized in that** the dialkylthioaryldiamine is present in the form of dimethylthiotolylenediamine.

10. Multi-component composition according to any of Claims 6 to 9, **characterized in that** the amine component further comprises a polytetramethylene oxide polyamine in the form of a diamine wherein the amine is connected to the polytetramethylene oxide preferably via a linker molecule, more preferably via a 4-carboxyphenyl linker.

11. Multi-component composition according to any of Claims 6 to 10, **characterized in that** the amine component further comprises a non-hydrolysable plasticizer, preferably in the form of an alkylsulphonic acid ester, more preferably of a phenyl alkylsulphonic acid ester.

12. Multi-component composition according to Claim 11, **characterized in that** the amine component has a dialkylthioaryldiamine content in the range from about 30 to 70 wt%, a polytetramethylene oxide polyamine content in the range from about 5 to 25 wt%, and a non-hydrolysable plasticizer content in the range from 20 to 60 wt%.

13. Multi-component composition according to any of Claims 6 to 10, **characterized in that** the isocyanate component and the amine component are present in a weight ratio in the range from about 4:1 to 2:1, preferably in the range from 3:1 to 2.2:1.

## Revendications

1. Utilisation d'une composition multicomposante, comprenant un composant isocyanate et un composant amine,
le composant isocyanate comprenant un prépolymère, pouvant être obtenu à partir de diisocyanate de toluylène et d'un polytétraméthylène-polyol, et
le composant amine comprenant une dialkylthioaryldiamine, de préférence une dialkylthiotoluylène-diamine, et éventuellement un oxyde de polytétraméthylène-polyamine,
pour la construction de modèles de fonderie, et ce en tant que résine de coulée ou résine de surface.

2. Modèle ou boîte à noyaux pour des applications de fonderie, **caractérisé en ce qu'**il comprend une couche en une composition durcie, qui peut être obtenue à partir d'une composition multicomposante, comprenant un composant isocyanate et un composant amine,
le composant isocyanate comprenant un prépolymère, pouvant être obtenu à partir de diisocyanate de toluylène et d'un polytétraméthylène-polyol, et
le composant amine comprenant une dialkylthioaryldiamine, de préférence une dialkylthiotoluylène-diamine, et éventuellement un oxyde de polytétraméthylène-polyamine.

3. Modèle selon la revendication 2, **caractérisé en ce que** le modèle est un modèle pour la fabrication de moules en sable ou une boîte à noyaux pour la fabrication de noyaux en sable.

4. Modèle selon la revendication 2 ou 3, **caractérisé en ce que** la couche en la composition multicomposante durcie présente une épaisseur dans la plage allant d'environ 6 à 15 mm.

5. Procédé de fabrication de modèles ou de boîtes à noyaux pour des applications de fonderie, **caractérisé en ce qu'**une composition multicomposante comprenant un composant isocyanate et un composant amine,
le composant isocyanate comprenant un prépolymère, pouvant être obtenu à partir de diisocyanate de toluylène et d'un polytétraméthylène-polyol, et
le composant amine comprenant une dialkylthioaryldiamine, de préférence une dialkylthiotoluylène-diamine, et éventuellement un oxyde de polytétraméthylène-polyamine, est mélangée et appliquée ou versée sur une pièce moulée et durcie.

6. Composition multicomposante, comprenant un composant isocyanate et un composant amine,
le composant isocyanate comprenant un prépolymère, pouvant être obtenu à partir de diisocyanate de toluylène et d'un polytétraméthylène-polyol, qui présente une teneur en isocyanate de 7 à 10 %, et
le composant amine comprenant une dialkylthioaryldiamine, de préférence une dialkylthiotoluylène-diamine, et éventuellement un oxyde de polytétraméthylène-polyamine.

7. Composition multicomposante selon la revendication 6, **caractérisée en ce que** la composition est essentiellement constituée par le composant isocyanate et le composant amine.

8. Composition multicomposante selon la revendication 6 ou 7, **caractérisée en ce que** le prépolymère présente une teneur en isocyanate dans la plage allant de 8 à 9,5 %.

9. Composition multicomposante selon l'une quelconque des revendications 6 à 8, **caractérisée en ce que** la dialkylthioaryldiamine se présente sous la forme de diméthylthiotoluylène-diamine.

10. Composition multicomposante selon l'une quelconque des revendications 6 à 9, **caractérisée en ce que** le composant amine contient en outre un oxyde de polytétraméthylène-polyamine sous la forme d'une diamine, dans laquelle l'amine est de préférence reliée par l'intermédiaire d'une molécule de liaison, de manière particulièrement préférée par l'intermédiaire d'un agent de liaison 4-carboxyphényle, avec l'oxyde de polytétraméthylène.

11. Composition multicomposante selon l'une quelconque des revendications 6 à 10, **caractérisée en ce que** le composant amine comprend en outre un plastifiant non saponifiable, de préférence sous la forme d'un ester d'acide alkylsulfonique, de manière particulièrement préférée d'un ester d'acide phénolalkylsulfonique.

12. Composition multicomposante selon la revendication 11, **caractérisée en ce que** le composant amine présente une teneur en dialkylthioaryldiamine dans la plage allant d'environ 30 à 70 % en poids, une teneur en oxyde de polytétraméthylène-polyamine dans la plage allant d'environ 5 à 25 % en poids, et une teneur en plastifiant non saponifiable dans la plage allant de 20 à 60 % en poids.

13. Composition multicomposante selon l'une quelconque des revendications 6 à 10, **caractérisée en ce que** le composant isocyanate et le composant amine sont présents en un rapport en poids dans la plage allant d'environ 4:1 à 2:1, de préférence dans la plage allant de 3:1 à 2,2:1.
